# EUROPEAN PATENT APPLICATION

(11) **EP 4 699 766 A1**
(43) Date of publication of application: **25.02.2026**
(21) Application number: 25196997.8
(22) Date of filing: 20.08.2025
(51) Int. Cl.: B27N 3/02, B27N 3/18, B32B 21/02, B27N 7/00, E04C 2/16

(54) **WOOD-PARTICLE PANEL EQUIPPED WITH AN IDENTIFICATION DEVICE AND RELATIVE METHOD**

(30) Priority: 22.08.2024 IT 202400019177
(71) Applicant: Gruppo Mauro Saviola S.r.l., 46019 Viadana (MN) (IT)
(72) Inventor: SAVIOLA, Alessandro, 46019 VIADANA (MN) (IT); SAVIOLA, Stefano, 46019 VIADANA (MN) (IT); MORENI, Massimo, 43123 PARMA (IT); GERBELLA, Matteo, 43123 PARMA (IT); GOZZI, Dario, 46019 VIADANA (MN) (IT); COCEANI, David, 34170 GORIZIA (IT); VALDINOCI, Roberto, 47052 CESENATICO (FC) (IT); ZAMBELLI, Pierluigi, 26041 CASALMAGGIORE (CR) (IT); VENIER, Lorenzo, 34123 TRIESTE (IT); RHO, Francesca, 43122 PARMA (IT)
(74) Representative: Bird & Bird Società tra Avvocati S.r.l.

(57) **Abstract**

A panel (1000) made of wood particles is described, equipped with at least one identification device (100) integrated in said panel, wherein said panel (1000) comprises three or more layers of resin-coated material, two fine-grained outer layers (130) and one or two coarse-grained inner layers (150); and a relative method for producing said panel (1000) which allows the arrangement of layers of fine resin-coated material, the deposition of layers of coarse resin-coated material, alternating with at least an arrangement of a plurality of identification devices on said layers of fine and/or coarse resin-coated material.

## Description

### OBJECT OF THE INVENTION

The present invention relates to a wood-particle panel equipped with an identification device and the relative production method.

### FIELD OF THE INVENTION

The present invention relates to a wood-particle panel equipped with an identification device, in particular a raw and/or faced chipboard panel equipped with a radio-frequency identification device integrated in the panel.

The invention also relates to a method for producing a chipboard panel equipped with an identification device.

### STATE OF THE ART

There is an increasingly strong need for the tracking and management of goods and their movement in the production world, and a considerable increase in this interest can be noted especially in the timber sector. Radio-frequency identification systems have consequently recently acquired ever-increasing importance for the production world in the field of timber, especially in the sector for the movement of goods, evolving towards increasingly advanced tracking applications. Traceability allows improvements of a logistical nature, as regards the flow of goods, as well as benefits in terms of visibility, maintenance, combating fraud and counterfeiting, with advantages also in the disposal phase.

It is known in the state of the art that panels, wooden boards, plywood boards, wooden packaging, etc. are provided with adhesive labels describing the product specifications, arranged on the surface of known wooden panels, but it is evident that these adhesive labels are subject to frequent detachments from the surface of the panel, following variations in temperature, humidity, and wear.

Wooden panels are also known which are composed of a plurality of layers of veneer joined together by an adhesive, provided with an intelligent identifier or an intelligent adhesive label, arranged between the layers of veneer of the wooden panel, in particular, said intelligent identifier is arranged on a line of glue between the layers of veneer, as described in patent document Nr. WO2008034948. This type of wooden panel does not guarantee continuous traceability as it is subject to detachment of the intelligent identifier from the layer on which it is adhered, and to any detachment between the glued layers of veneer, following variations in temperature, humidity, wear, impact, etc..

Furthermore, solid wooden panels are known, having a recess on the lateral surface designed for facilitating the housing of a RFID tag for the identification and tracking of a panel, through a process for the processing of solid wooden panels, as described in patent EP2230626, this process involves the creation of an ad hoc recess, i.e. a cavity in the wooden panel, and the fixing of the RFID element in this recess by gluing, this RFID element arranged on the panel could consequently be subject to repeated stress that could cause it to become detached, also as a result of climatic variations.

It is evident that there is no known wood-particle panel equipped with an identification device that is completely integrated into the panel during the panel manufacturing process, without the need for providing suitable housings for containing it, and that guarantees optimal and continuous identification of the panel, preventing the detachment of the identification device from the panel following mechanical and climatic stress.

### SUMMARY

The general objective of the present invention is to solve the above-mentioned problems of the prior art by providing a wood-particle panel having an identification element integrated in the wood-particle panel.

A first more specific objective of the present invention is to provide a method for producing a wood-particle panel equipped with an identification element, wherein the identification element is integrated in the panel without the use of glues or fixing adhesives, but inserted and integrated during one or more manufacturing steps of the panel.

A second more specific objective is to manage the traceability of the panel from the moment of production of the panel, until the acquisition of the panel by an end user.

This general objective in addition to other more specific objectives are achieved thanks to what is expressed in the enclosed claims which form an integral part of this description.

### LIST OF FIGURES

The present invention will become more evident from the following detailed description to be considered together with the attached drawings in which:
Figure 1 shows a schematic view of a first preferred embodiment of the panel according to the present invention;
Figure 2 shows a schematic view of a second configuration of an identification device in the panel as per Figure 1;
Figure 3 shows a schematic view of a third configuration of an identification device in the panel as per Figure 1;
Figures 4, 4B, 4C show a schematic view of a fourth configuration of an identification device in the panel as per Figure 1;
Figure 5 shows a schematic view of a fifth configuration of an identification device in the panel as per Figure 1;
Figure 6 shows a schematic view of a second embodiment of the panel according to the present invention;
Figure 7 shows a perspective view of an exploded view of the panel according to the present invention;
Figure. 8 shows a flowchart of an embodiment of a panel production method according to the present invention;
Figures 9 to 14 show flowcharts of one-step embodiments of the panel production method, as per Figures 1 to 6;
Figure 15 shows a perspective view of a panel production system according to the present invention.

As can be easily understood, there are various ways of implementing the present invention in practice, which is defined in its main advantageous aspects in the enclosed claims and is not limited either by the following detailed description or by the attached drawings.

### DETAILED DESCRIPTION

In this description, the term "wood-particle panel" refers to a chipboard panel made of wooden particles, or raw panel, or faced panel, or packaging panel, or any other similar element made of wood or with a woody appearance; in particular, faced panel means the application on the outer surfaces of a raw panel of decorative sheets of paper and/or laminates and/or woody essences (such as veneers and the like).

In this description, the term "identification device" refers to a radio-frequency identification device, or a wireless identification device, or a barcode identification device, or any device for automatic recognition, validation and/or storage of information at a distance.

With general reference to the various figures, a preferred, but non-limiting, embodiment of a wood-particle panel according to the present invention is shown, indicated as a whole with the reference number 1000.

It will be referred to hereunder with the abbreviated notation "panel 1000".

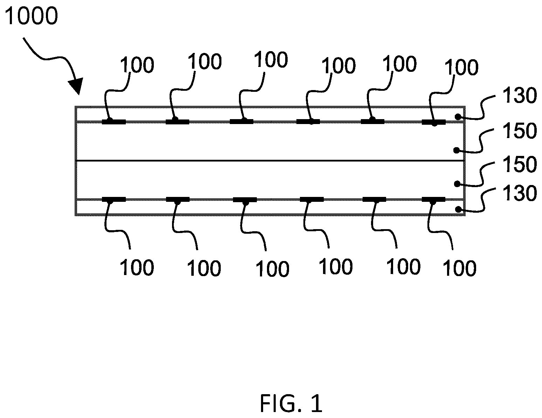

With reference to the figures, a panel 1000 is described, preferably a raw and/or faced chipboard panel, equipped with at least one identification device 100. This identification device 100 is integrated inside the panel 1000. The panel 1000, according to a first embodiment, is advantageously composed of at least four layers of resin-coated material, in particular two fine-grained outer layers 130 and two coarse-grained inner layers 150, arranged between the two fine-grained outer layers 130, as shown in Figure 1.

The identification device 100 is arranged between one of the two fine-grained outer layers 130 and/or one of the two coarse-grained inner layers 150, as shown in Figure 1.

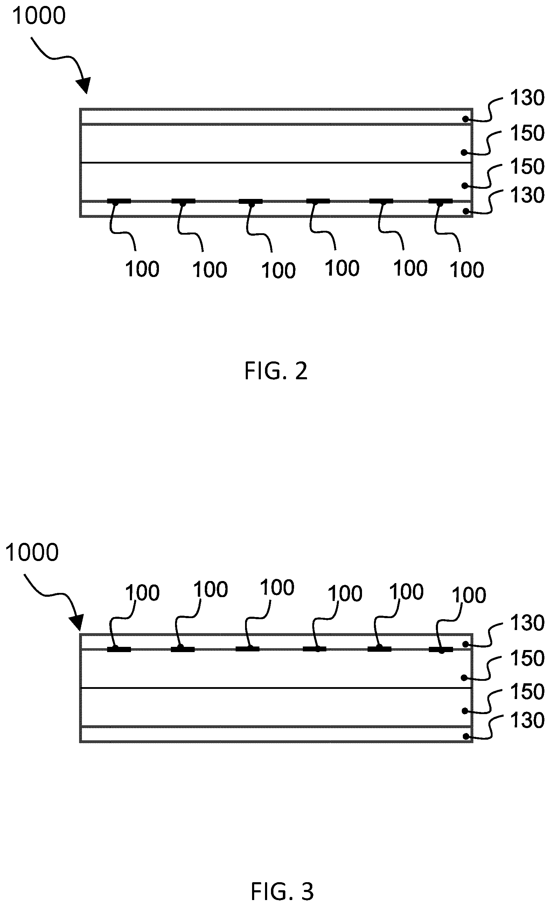

In a second configuration, as shown in Figure 2, the identification device is arranged between the lower fine-grained outer layer 130, and a coarse-grained inner layer 150, arranged above the lower fine-grained outer layer 130.

In a third configuration, as shown in Figure 3, the identification device is arranged between the upper fine-grained outer layer 130, and a coarse-grained inner layer 150 arranged below the upper fine-grained outer layer 130.

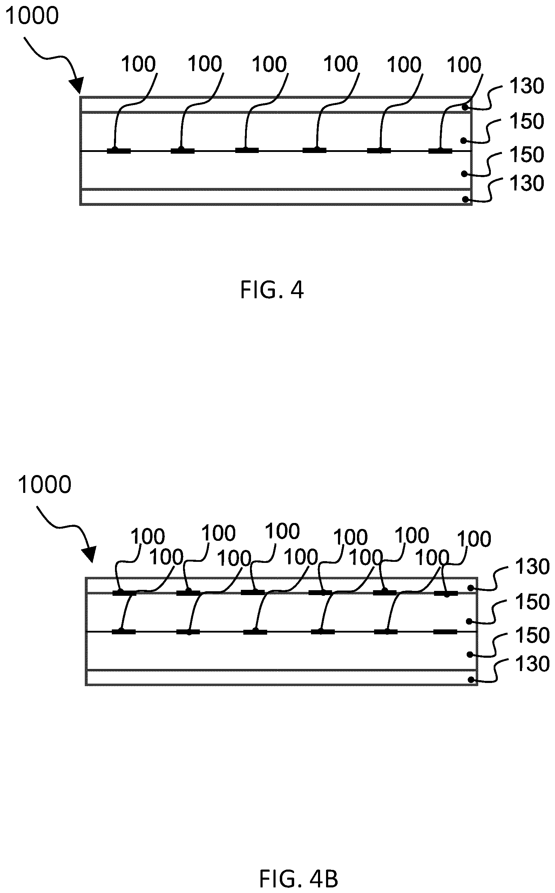

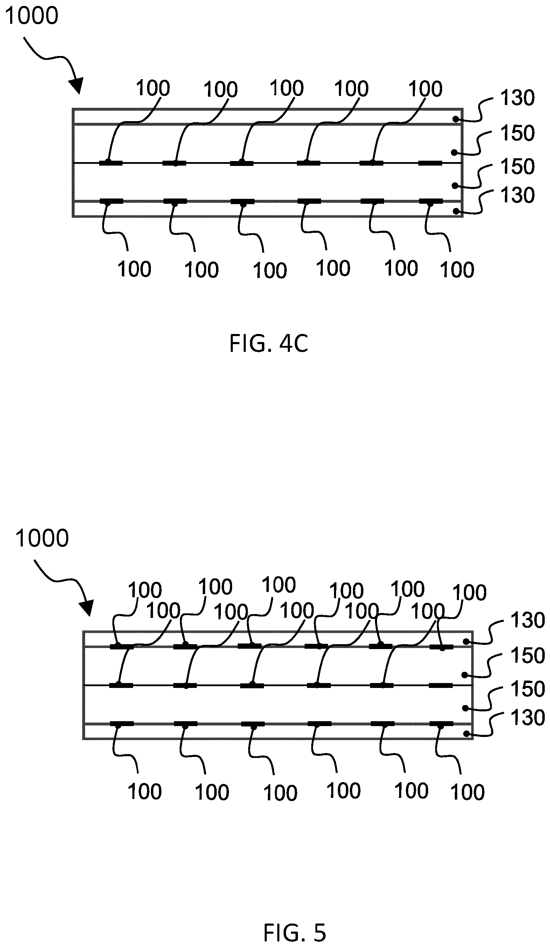

A fourth configuration is shown in Figure 4, in which the identification device 100 is arranged between the two coarse-grained inner layers 150.

A variant of the configuration is shown in Figure 4B in which the identification device 100 is arranged between the two coarse-grained inner layers 150 and at the same time between the upper fine-grained outer layer 130 and the coarse-grained inner layer 150.

A variant of the configuration is also shown in Figure 4C in which the identification device 100 is arranged between the two coarse-grained inner layers 150 and at the same time between the lower fine-grained outer layer 130 and the coarse-grained inner layer 150.

As shown in Figure 5 in a fifth configuration, the identification device 100 is advantageously arranged simultaneously between each of the two fine-grained outer layers 130 and one of the two coarse-grained inner layers 150, and between the two coarse-grained inner layers 150.

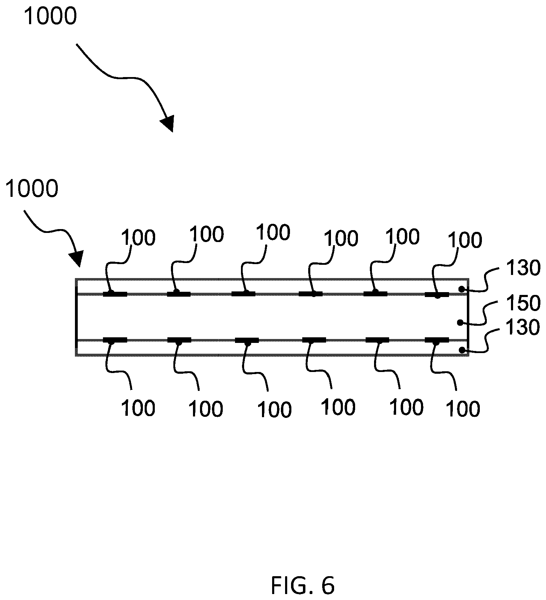

Figure 6 shows a second embodiment of the panel 1000, consisting of three or more layers of resin-coated material, in particular two fine-grained outer layers 130 and a coarse-grained inner layer 150, arranged between the two fine-grained outer layers 130.

In this second configuration, the identification device 100 is arranged between one, or both, of the two fine-grained outer layers 130 and a coarse-grained inner layer 150. The identification device 100 is a radio-frequency identification device that uses the RFID (Radio Frequency Identification) technology or NFC (Near Field Communication) technology, or another similar technology. The identification device 100 is preferably substantially composed of:
a tag, preferably a RFID tag, composed of: a chip and an antenna assembled on at least one small-sized support, rigid or flexible, and made of a material such as: plastic, polyethylene terephthalate (PET), paper, glass, epoxy, etc.;
- a reader, equipped with an antenna, capable of receiving data from the tag and sending it to a computer system.

The plurality of identifying information associated with the panel 1000, such as, for example, production date, batch number, sub-batch number, product type, laboratory tests, technical data sheets, product and system certifications, safety data sheet, etc. is advantageously stored in a computer portal, to which the operator is directed via the tag chip, preferably a RFID tag, and following a request from an operator, said plurality of information is recalled via the tag antenna, to the reader antenna. The reader is subsequently able to connect to this plurality of information via a computer system, which, via an interface, allows the operator to manage said plurality of information, and to modify it remotely.

The panel 1000 is obtained from a woody mass preferably recycled and recovered, and after a cleaning and chipping step the woody mass is fragmented into a plurality of wood particles with different grain sizes; this plurality of wood particles, after being refined and dried, is divided into two different grain-size fractions; a coarse fraction and a fine fraction, then mixed separately with thermosetting resin and additives to obtain a resin-coated woody mass.

A coarse grain size refers to a grain size within the range of 2 mm to 6 mm, whereas a fine grain size refers to a grain size within the range of 0 mm to 2 mm (extremes excluded).

Examples of thermosetting resins are aminoplastic resins, phenolic resins, or epoxy resins, or urethane foams, or unsaturated polyester resins, or alkyd resins, or isocyanates and pre-polymerized isocyanates, or bio-based resins, or semi-bio-based resins, or any material that undergoes an irreversible chemical transformation when subjected to heating.

At least one identification device is inserted into said resin-coated woody mass, before being subjected to shaping, pressing and cooling.

The panel 1000, object of the present invention, has some significant advantages compared to the products of the state of the art, namely it gives simplicity to the panel production method, the distribution of at least one identification device on the layers of resin-coated material is a much simpler and more immediate step compared to the known process of physically creating a cavity on the lateral surface of a panel for housing the identification device.

Furthermore, the panel 1000 equipped with the integrated identification device, guarantees optimal and continuous identification of the panel, preventing the detachment of the identification device from the panel following mechanical and climatic stress.

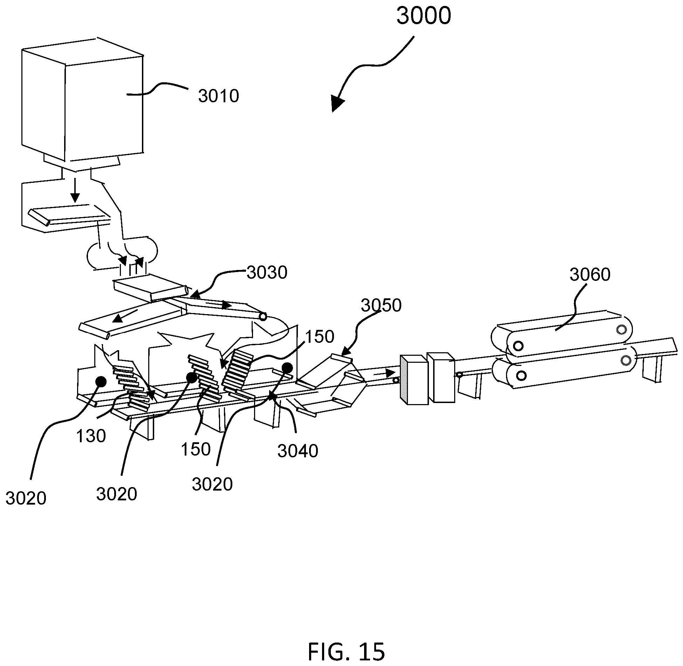

A system 3000 for producing a panel 1000 is shown for illustrative and non-limiting purposes in Figure 15, mainly comprising:
- at least one resin-coating device 3010 of a woody mass;
- two or more formers 3020 capable of receiving the resin-coated woody mass coming from the resin-coating device 3010;
- a plurality of conveyor belts 3030 capable of directing fine resin-coated material entering from the formers 3020;
- a conveyor belt 3040 capable of receiving two layers of fine resin-coated material 130 and two layers of coarse resin-coated material 150 exiting from the formers 3020 by means of the plurality of conveyor belts 3030.
- a belt press 3050 designed for promoting pre-compression and deaeration of the layered mattress;
- a continuous press 3060 capable of inducing a final pressing and baking of the layered mattress exiting from the belt press 3050 with a thickness value pre-established by the operator.

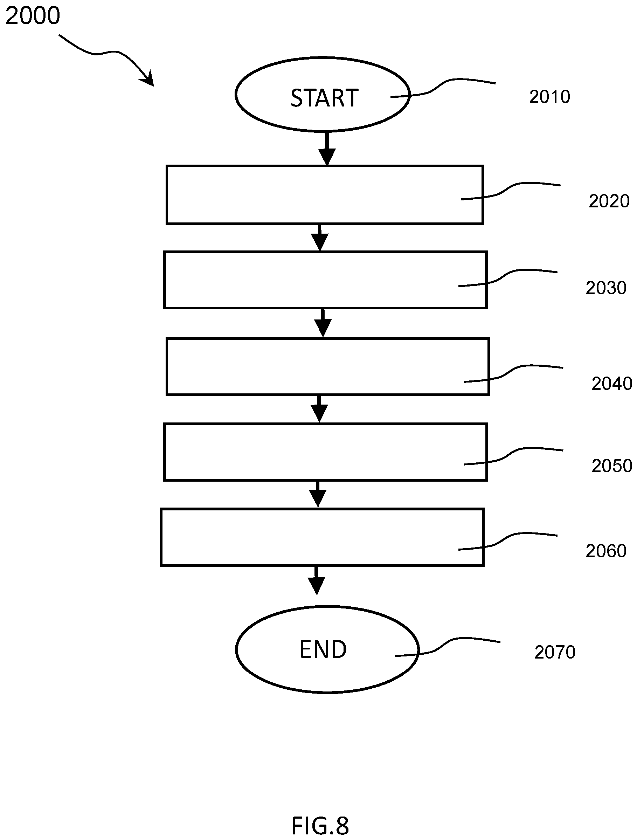

Figure 8 shows a flowchart 2000 of a method for producing a panel 1000 having a plurality of identification devices. The flowchart has a starting block 2010 and a final block 2070; the steps corresponding to blocks 2020 to 2060 are typically repeated multiple times during the method for producing the panel 1000, in accordance with an innovative method 2000, as shown by way of example in the Figures comprising the following steps:
- arranging 2020 the plurality of identification devices between two or more layers of resin-coated material;
- obtaining 2030 a layered mattress of wood particles;
- pre-compression and deaeration 2040 of the layered mattress, by means of the belt press 3050, and the resin-coated wood particles of the layered mattress are assembled due to the cold cohesion of the resin and the pressure action of the press, allowing a pre-pressed layered mattress to be obtained;
- pressing and heating 2050 the pre-pressed layered mattress by means of the continuous press 3060, and obtaining a pressed layered panel with a thickness value previously set by an operator, preferably with a thickness value within the range of 7 m to 44 mm;
- finishing 2060 with cross-cutting of the stratified panel and obtaining the final hardened panel 1000 equipped with a plurality of identification devices.

The panel 1000 thus obtained is then cooled by prolonged exposure to atmospheric air, and is subsequently subjected to calibration and sanding necessary for obtaining the panel 1000 with the dimensional and aesthetic characteristics requested by the operator.

This method 2000 advantageously allows the arrangement of layers of fine resin-coated material, the deposition of layers of coarse resin-coated material, alternating with at least one arrangement of a plurality of identification devices on said layers of fine and/or coarse resin-coated material.

In a preferred embodiment, the arrangement step 2020 of the plurality of identification devices is carried out in such a way that said identification devices are spaced from each other at a distance which is such as to ensure the presence of at least one identification device in the final hardened panel at the end of the finishing step 2060. In this way, each final hardened panel obtained at the end of the process has at least one identification device that allows the traceability of the panel to be managed from the moment of production of the panel, up to the acquisition of the panel by an end user (with obvious advantages in terms of logistics).

In a further preferred embodiment, the step 2020 for arranging the plurality of identification devices is carried out in such a way that said identification devices are spaced apart from each other at a distance which is such as to ensure the presence of at least two identification devices in the final hardened panel at the end of the finishing step 2060. In this way, each final hardened panel obtained at the end of the process has at least two identification devices. This allows various advantages to be obtained, including the possibility of having a spare identification device in the final panel and the possibility of storing a greater number and/or different types of information in the final panel.

Furthermore, this embodiment allows a final panel comprising different types of identification devices to be obtained - for example a radio-frequency identification device and a wireless identification device and/or a barcode identification device - thus facilitating the logistics chain (as the various subjects involved in said chain do not necessarily have to be equipped with specific reading devices, but can use those already in their possession, with undoubted advantages in terms of costs).

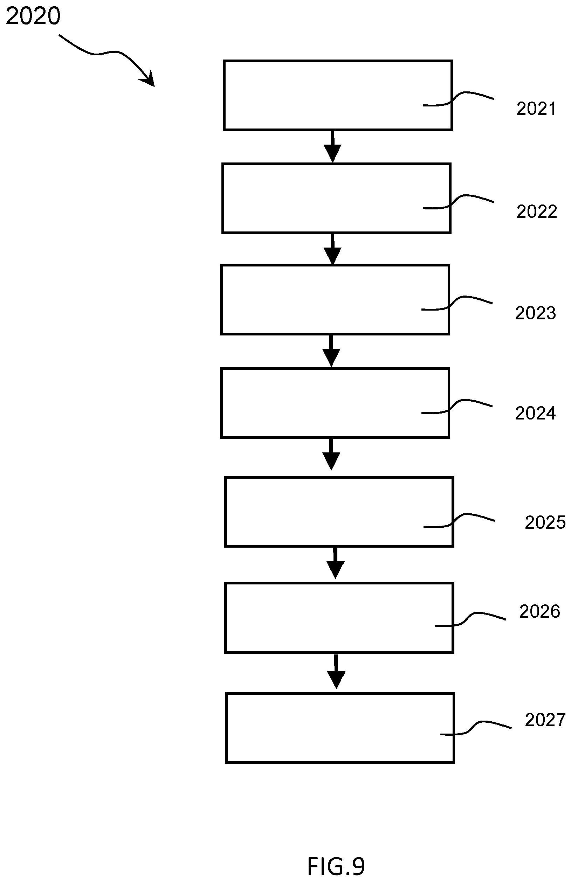

As shown in Figure 9, the arrangement step 2020 of the plurality of identification devices advantageously comprises the following steps:
- preparation 2021 of a woody mass of wooden particles obtained from a previous resin-coating step, and arrangement of the resin-coated woody mass inside four formers, in particular two formers for obtaining fine resin-coated material and two formers for obtaining coarse resin-coated material;
- deposition 2022 on a conveyor belt 3040 of a first layer of fine resin-coated material 130 of wood particles;
- first deposition 2023 of a plurality of identification devices on the first layer of 130 fine resin-coated material deposited;
- deposition 2024 of a first layer of coarse resin-coated material 150 of wood particles;
- deposition 2025 of a second layer of coarse resin-coated material 150 of wood particles;
- second arrangement 2026 of a plurality of identification devices on the second layer of coarse resin-coated material 150 deposited on the first layer of coarse resin-coated material 150;
- deposition 2027 of a second layer of fine resin-coated material 130 of wood particles.

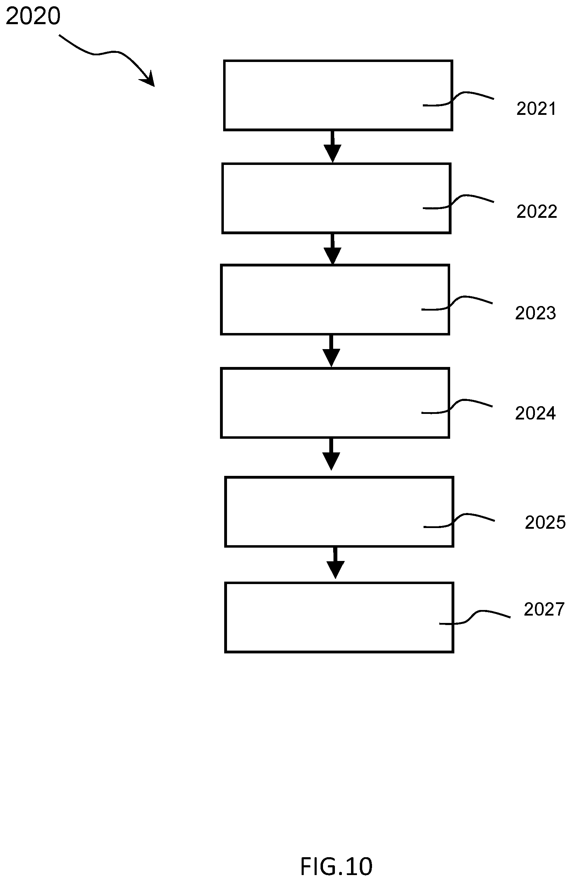

As shown in Figure 10, the arrangement step 2020 of the plurality of identification devices, arranged according to a second configuration as shown in Figure 2, comprises the following steps:
- preparation 2021 of a woody mass obtained from a previous resin-coating step, and arrangement of the resin-coated woody mass inside two or more formers;
- deposition 2022 on the conveyor belt 3040 of a first layer of fine resin-coated material 130;
- preparation 2023 of the plurality of identification devices on the first layer of fine resin-coated material 130 deposited;
- deposition 2024 of a first layer of coarse resin-coated material 150 of wood particles;
- deposition 2025 of a second layer of coarse resin-coated material 150 of wood particles;
- deposition 2027 of a second layer of fine resin-coated material 130.

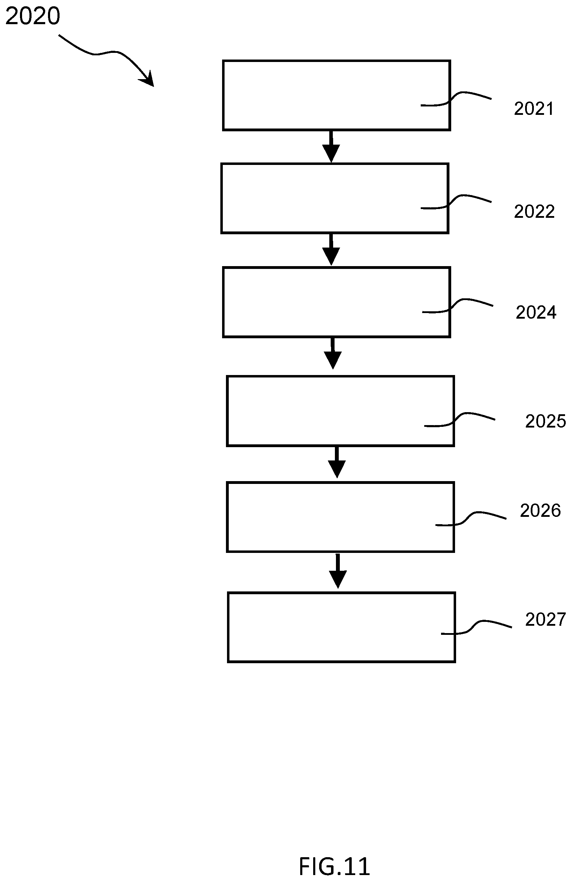

Furthermore, as shown in Figure 11. the arrangement step 2020 of the plurality of identification devices, arranged according to a third configuration as shown in Figure 3, comprises the following steps:
- preparation 2021 of the woody mass obtained from a previous resin-coating step, and arrangement of the resin-coated woody mass inside two or more formers;
- deposition 2022 on a conveyor belt 3040 of a first layer of fine resin-coated material 130;
- deposition 2024 of a first layer of coarse resin-coated material 150 of wood particles;
- deposition 2025 of a second layer of coarse resin-coated material 150 of wood particles;
- arrangement 2026 of a plurality of identification devices on the second layer of coarse resin-coated material 150 deposited on the first layer of coarse resin-coated material 150; and
- deposition 2027 of a second layer of fine resin-coated material 130 of wood particles.

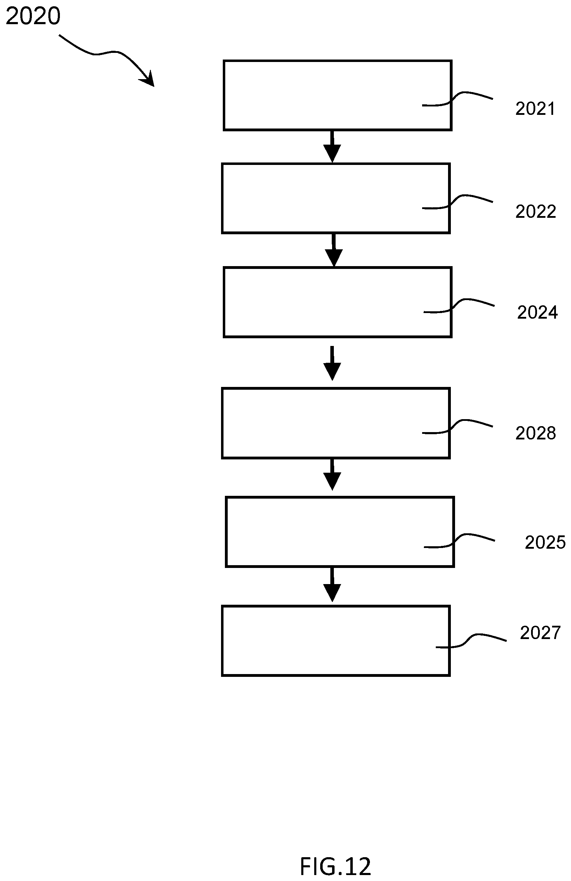

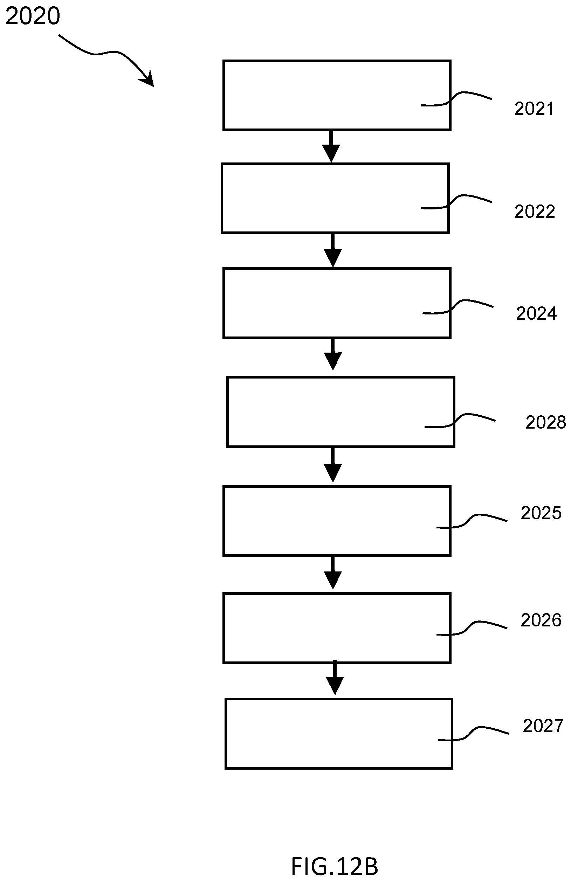

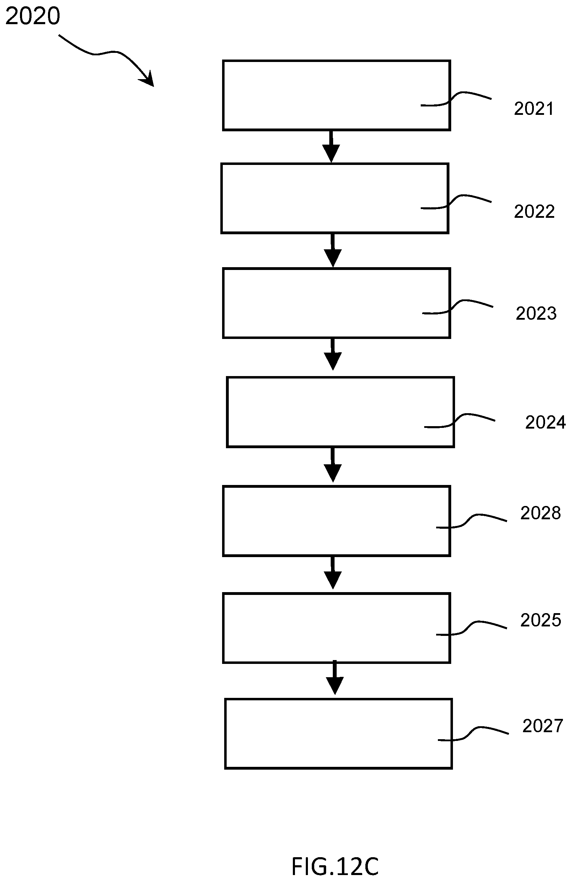

As shown in Figure 12, the arrangement step 2020 of the plurality of identification devices, arranged according to a fourth configuration as shown in Figure 4, comprises the following steps:
- preparation 2021 of the woody mass obtained from a previous resin-coating step, and arrangement of the resin-coated woody mass inside two or more formers;
- deposition 2022 on a conveyor belt 3040 of a first layer of fine resin-coated material 130;
- deposition 2024 of a first layer of coarse resin-coated material 150 of wood particles;
- arrangement 2028 of a plurality of identification devices on the first layer of coarse resin-coated material 150 deposited;
- deposition 2025 of a second layer of coarse resin-coated material 150 of wood particles;
- deposition 2027 of a second layer of fine resin-coated material 130.

As shown in Figure 12B, the arrangement step 2020 of the plurality of identification devices, arranged as shown in Figure 4B, comprises the following steps:
- preparation 2021 of the woody mass obtained from a previous resin-coating step, and arrangement of the resin-coated woody mass inside two or more formers;
- deposition 2022 on a conveyor belt 3040 of a first layer of fine resin-coated material 130;
- deposition 2024 of a first layer of coarse resin-coated material 150 of wood particles;
- arrangement 2028 of a plurality of identification devices on the first layer of coarse resin-coated material 150 deposited;
- deposition 2025 of a second layer of coarse resin-coated material 150 of wood particles;
- arrangement 2026 of a plurality of identification devices on the second layer of coarse resin-coated material 150 deposited;
- deposition 2027 of a second layer of fine resin-coated material 130.

As shown in Figure 12C, the arrangement step 2020 of the plurality of identification devices, arranged as shown in Figure 4C, comprises the following steps:
- preparation 2021 of the woody mass obtained from a previous resin-coating step, and arrangement of the resin-coated woody mass inside two or more formers;
- deposition 2022 on a conveyor belt 3040 of a first layer of fine resin-coated material 130;
- arrangement 2023 of a plurality of identification devices on the first layer of fine resin-coated material 130 deposited;
- deposition 2024 of a first layer of coarse resin-coated material 150 of wood particles;
- arrangement 2028 of a plurality of identification devices on the first layer of coarse resin-coated material 150 deposited;
- deposition 2025 of a second layer of coarse resin-coated material 150 of wood particles;
- deposition 2027 of a second layer of fine resin-coated material 130.

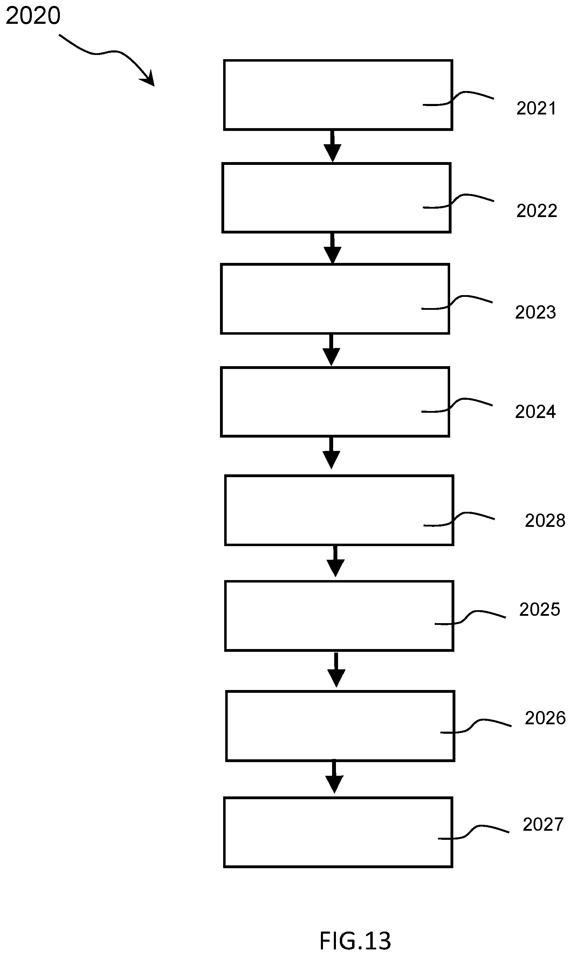

As shown in Figure 13, the arrangement step 2020 of the plurality of identification devices, arranged according to a fifth configuration as shown in Figure 5, advantageously comprises the following steps:
- preparation 2021 of a woody mass obtained from a previous resin-coating step, and arrangement of the resin-coated woody mass inside two or more formers;
- deposition 2022 on a conveyor belt 3040 of a first layer of fine resin-coated material 130;
- arrangement 2023 of a plurality of identification devices on the first layer of fine resin-coated material 130 deposited;
- deposition 2024 of a first layer of coarse resin-coated material 150 of wood particles;
- arrangement 2028 of a plurality of identification devices on the first layer of coarse resin-coated material 150 deposited;
- deposition 2025 of a second layer of coarse resin-coated material 150 of wood particles;
- arrangement 2026 of a plurality of identification devices on the second layer of coarse resin-coated material 150 deposited on the first layer of coarse resin-coated material; and
- deposition 2027 of a second layer of fine resin-coated material 130.

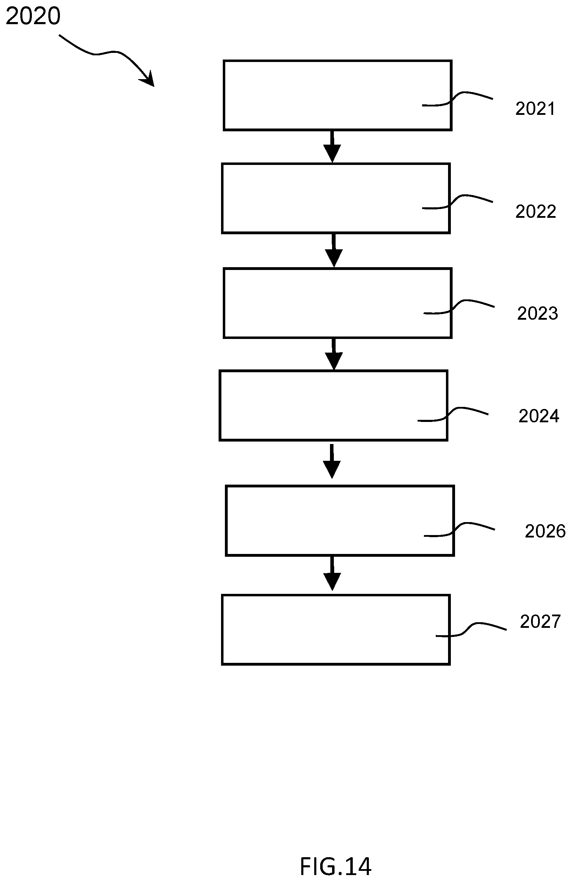

Finally, as shown in Figure 14, the arrangement step 2020 of the plurality of identification devices, relating to the second embodiment of the panel as shown in Figure 6, comprises the following steps:
- preparation 2021 of a woody mass obtained from a previous resin-coating step, and arrangement of the resin-coated woody mass inside two or more formers;
- deposition 2022 on a conveyor belt 3040 of a first layer of fine resin-coated material 130;
- arrangement 2023 of a plurality of identification devices on the first layer of fine resin-coated material 130 deposited;
- deposition 2024 of a first layer of coarse resin-coated material 150 of wood particles;
- arrangement 2026 of a plurality of identification devices on the second layer of coarse resin-coated material 150 deposited on the first layer of coarse resin-coated material; and
- deposition 2027 of a second layer of fine resin-coated material 130.

In particular, the provisions 2023, 2026, 2028 of the plurality of identification devices comprise the provision of at least one identification device for each 1000 panel, advantageously at least one for every 0.5 m² of panel surface 1000.

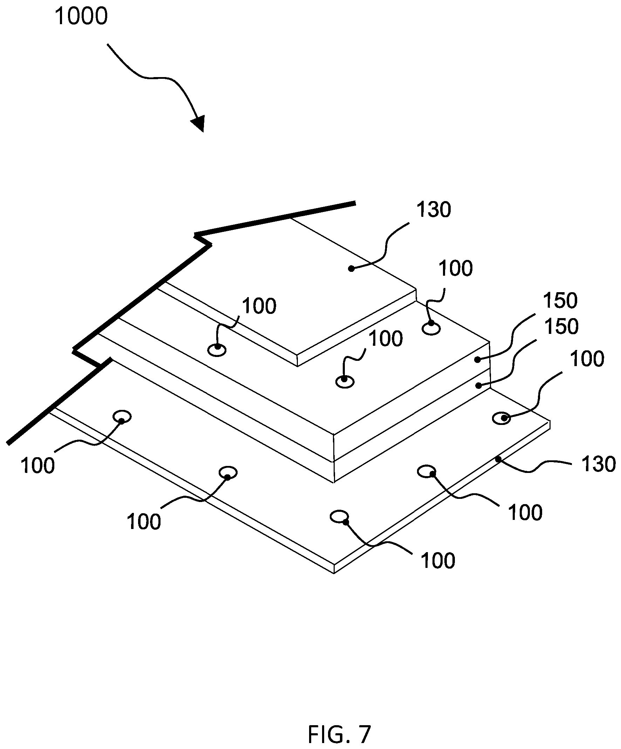

The devices, distributed on the layers of fine resin-coated material 130 deposited, are advantageously reciprocally equidistant according to a reticular arrangement, as shown in Figure 1, and similarly the plurality of devices distributed on the second layers of coarse resin-coated material 150 are reciprocally equidistant according to a reticular arrangement, as also shown in Figure 7.

Furthermore, the plurality of identification devices is composed of a material which is such as to allow the implementation of the method 2000 for the production of the panel 1000 by applying the same process conditions, in terms of pressure, temperature and rate, of a normal production process of a panel, in particular each identification device 100 is designed to withstand a temperature higher than or equal to 100°C and a maximum pressure greater than or equal to 2 MPa.

## Claims

1. A panel (1000) made of wood particles equipped with at least one identification device (100) integrated into said panel (1000),
wherein said panel (1000) comprises four layers of resin-coated material, two fine-grained outer layers (130) and two coarse-grained inner layers (150), wherein said identification device (100) is arranged between one of said two fine-grained outer layers (130) and/or one of said two coarse-grained inner layers (150).

2. The panel (1000) according to claim 1, wherein said identification device (100) is arranged between the two coarse-grained inner layers (150).

3. The panel (1000) according to claim 1, wherein said identification device (100) is arranged simultaneously between each of the two fine-grained outer layers (130) and one of the two coarse-grained inner layers (150), and between the two coarse-grained inner layers (150).

4. The panel (1000) according to claim 1, wherein said identification device (100) is a radio-frequency identification device.

5. The panel (1000) according to claim 4, wherein said radio-frequency identification device is a RFID radio-frequency identification device equipped with a RFID tag.

6. The panel (1000) according to any of the previous claims, wherein said identification device (100) is capable of withstanding a temperature higher than or equal to 100°C and a pressure greater than or equal to 2 MPa.

7. A wood-particle panel with at least one identification device integrated in said panel,
wherein said panel comprises three layers of resin-coated material, two fine-grained outer layers and a coarse-grained inner layer,
wherein said identification device is arranged between one or both of the fine-grained outer layers and the coarse-grained inner layer.

8. A method (2000) for the production of a wood-particle panel equipped with a plurality of identification devices, comprising the following steps:
- arrangement (2020) of said plurality of identification devices between two or more layers of resin-coated material;
- obtaining (2030) a layered mattress;
- pre-compression and deaeration (2040) of said layered mattress preferably by means of a belt press, and obtaining a pre-pressed layered mattress;
- pressing and heating (2050) preferably by means of a continuous press of said pre-pressed layered mattress, and obtaining a pressed layered panel with a thickness value;
- finishing (2060) with transversal cutting of said pressed stratified panel and obtaining a final hardened panel equipped with said plurality of identification devices.

9. The method (2000) according to claim 8, wherein said step for arranging (2020) said plurality of identification devices comprises the deposition of layers of fine resin-coated material, the deposition of layers of coarse resin-coated material, alternating with at least an arrangement of a plurality of identification devices on said layers of fine and/or coarse resin-coated material.

10. The method (2000) according to claim 8, wherein said arrangements of said plurality of identification devices comprises arranging each identification device of said plurality of identification devices for every 0.5 m² of surface area of said panel.

11. The method (2000) according to claim 8, wherein said plurality of identification devices, distributed on said layers of fine resin-coated material and/or on said second layer of coarse resin-coated material, are reciprocally equidistant according to a reticular arrangement.

12. The method (2000) according to claims 8, implemented by means of a system (3000) for producing said wood-particle panel, wherein said system (3000) comprises: a device for resin-coating said woody mass; two or more formers (3020); a plurality of conveyor belts (3030); a conveyor belt (3040); a belt press (3050) and a continuous press (3060).

13. Use of a RFID tag, for the identification of a wood-particle panel in a multi-step production method according to one of claims 8 to 9, comprising a plurality of information associated with said panel.
